# EUROPÄISCHE PATENTSCHRIFT

(11) **EP 0 538 616 B1**
(45) Veröffentlichungstag und Bekanntmachung des Hinweises auf die Patenterteilung: **24.07.1996**
(21) Anmeldenummer: 92115620.4
(22) Anmeldetag: 12.09.1992
(51) Int. Cl.: C08L 77/00, C08K 13/02

(54) **Unverstärkte Polyamidformmassen**
Unreinforced polyamide moulding compositions
Compositions de moulage de polyamides non-renforcées

(30) Priorität: 26.09.1991 DE 4131986
(43) Veröffentlichungstag der Anmeldung: 28.04.1993
(73) Patentinhaber: BASF Aktiengesellschaft, 67063 Ludwigshafen (DE)
(72) Erfinder: Betz, Walter, Dr., W-6700 Ludwigshafen (DE)

(56) Entgegenhaltungen:
- EP-A- 0 280 221
- WO-A-88/02763
- DE-A- 1 952 912
- DATABASE WPIL Section Ch, Week 8501, Derwent Publications Ltd., London, GB; Class A, AN 85-003918 & JP-A-59 204 632
- Gächter/Müller : Plastics Additives, 4th Edition, Seiten 723-724
- Katz/Milewski : Handbook of Fillers and Reinforcements for Plastics, Seite 237
- Proceedings of the "Flame Retardants '92" Conference, held at London, Verlag Elsevier, Seiten 100-109

## Beschreibung

Die Erfindung betrifft unverstärkte Polyamidformmassen, enthaltend
A) 60 bis 100 Gew.-% einer Mischung, bestehend aus
   A₁) 97,5 bis 99,85 Gew.-% mindestens einem Polyamid,
   A₂) 0,05 bis 0,5 Gew.-% Aluminiumhydroxid und
   A₃) 0,1 bis 2 Gew.-% mindestens einem Ester oder Amid gesättigter oder ungesättigter aliphatischer Carbonsäuren mit 10 bis 40 C-Atomen mit aliphatischen gesättigten Alkoholen oder Aminen mit 2 bis 40 C-Atomen
   sowie, bezogen auf das Gesamtgewicht der Polyamidformmassen,
B) 0 bis 40 Gew.-% eines schlagzähmodifizierenden Polymeren
C) 0 bis 10 Gew.-% üblicher Zusatzstoffe in wirksamen Mengen.

Weiterhin betrifft die Erfindung die Verwendung derartiger Formmassen zur Herstellung von Fasern, Folien und Formkörpern sowie die aus den erfindungsgemäßen Formmassen erhältlichen Formkörper.

Polyamide werden in vielen Bereichen verwendet, z.B. im Automobilbereich, zur Herstellung von Gehäusen für Elektrogeräte oder auf dem Bausektor.

Die problemlose Verarbeitung zu vielen verschieden geformten Formkörpern spielt hierbei eine wesentliche Rolle.

Zur besseren Verarbeitung werden Polyamide daher meist mit Schmiermittelzusätzen verarbeitet. Diese können bei der Verarbeitung im Extruder - bei der Konfektionierung - zugegeben werden oder nachträglich aufgebracht werden.

Durch den Zusatz von Schmiermitteln soll ein besseres Fließen der Polyamidschmelze gewährleistet werden (besseres Wandgleiten in der Spritzgußmaschine, wodurch ein geringerer Druck zum Fällen der Spritzgußform ausreicht) sowie eine leichtere Entformung des Spritzgußformkörpers (d.h. verringertes Formkleben und damit geringere Zykluszeiten).

Aus der EP-A 280 221 ist bekannt, auf ein Polyamidgranulat nachträglich Schmiermittel aufzubringen (sog. Außenschmierung). Diese Schmiermittel bestehen aus einer Kombination von Metallsalzen und Estern von Fettsäuren, insbesondere Stearinsäure.

Aus der DE-A 2 349 835 sind füllstoffhaltige Polyamidformmassen bekannt, welche Metallsalze langkettiger Carbonsäuren als Schmiermittel enthalten, die bei der Konfektionierung eingearbeitet werden (sog. Innenschmierung).

polyamide sind als Polymere ohne derartige Zusätze schwer entflammbar, d.h. im Brandtest nach UL-94 wird die Einstellung V-2 mit einer maximalen Nachbrenndauer von 10 Sekunden erreicht. Durch den Zusatz von Schmiermitteln wird die maximale Nachbrenndauer von 30 Sekunden pro Stab nach Beflammung überschritten (gleichbedeutend mit einer UL-94 Einstufung HB). Mit Aluminiumstearat ausgerüstete Polyamide (s. DE-A 2 349 835) erreichen zwar eine Klassifizierung von V-2, führen jedoch bei der Verarbeitung zu einem Molekulargewichtsabbau des Polyamids und damit verbunden zu einem Zähigkeitsverlust. Entsprechend ist diese Anwendung bei hochmolekularen Polyamiden nicht geeignet.

Schmiermittel wie Polytetrafluorethylen, Molybdänsulfid oder Graphit (s. GB-A 1 082 686) weisen Nachteile wie kostenintensiv, toxisch oder zu dunkle Eigenfarbe auf.

Die WO-A 88/02763 beschreibt Nukleierungsmittel für Polyamide und diese Mittel enthaltende Polyamidzusammensetzungen, wobei das Nukleierungsmittel u.a. auch Fettsäureamide enthält.

Die Verwendung von Aluminiumhydroxid als Flammschutzmittel in polymeren ist beispielsweise aus den Publikationen Gächer/Müller: Plastics Additives, 4. Aufl., S.723-724 und Katz/Milewski: Handbook of Fillers and Reinforcements for Plastics, S. 237 bekannt. Jedoch tritt die den Flammschutz bewirkende Zersetzungsreaktion des Al(OH)₃ bereits bei Temperaturen deutlich unterhalb der hohen Verarbeitungstemperaturen des Polyamid ein.

Aus der EP-A 331 001 ist der Zusatz von Polyetherestern in polyamidformmassen zur Verbesserung der Fließfähigkeit bekannt. Die Brandklasse V-2 nach UL-94 wird von diesen Formmassen nicht erreicht.

Aus der EP 413 258 ist der Zusatz von Polyetherestern mit Aluminiumsalzen oder Aluminiumoxid bekannt. Neben einem Molekulargewichtsabbau durch die Aluminiumsalze führen Polyetherester zu einer Abnahme der UV-Beständigkeit der Polyamide. Zusätzlich sind diese Zusätze sehr konstenintensiv. In der DE-A 40 39 420 wird ein Verfahren zur Herstellung von leichtfließenden Polyamidformmassen vorgeschlagen, wobei Polyetherester mit Polyamidpräpolymeren in fester Phase nachkondensiert werden.

Aufgabe der vorliegenden Erfindung war es daher, unverstärkte Polyamidformmassen zur Verfügung zu stellen, die eine Klassifizierung V-2 nach UL-94 erreichen und eine gute Fließfähigkeit sowie UV-Beständigkeit aufweisen. Darüber hinaus sollte die Herstellung derartiger Formmassen mit verschiedenen Verfahrensmethoden gewährleistet sein.

Demgemä8 wurden die eingangs definierten Formmassen gefunden. Bevorzugte Massen dieser Art und ihre Verwendung sind den Unteransprüchen zu entnehmen.

Als Komponente A enthalten die erfindungsgemäßen Formmassen 60 bis 100, vorzugsweise 80 bis 100 und insbesondere 80 bis 90 Gew.-% einer Mischung, bestehend aus
A) 60 bis 100 Gew.-% einer Mischung, bestehend aus
   A₁) 97,5 bis 99,85 Gew.-% mindestens einem Polyamid,
   A₂) 0,05 bis 0,5 Gew.-% Aluminiumhydroxid und
   A₃) 0,1 bis 2 Gew.-% mindestens einem Ester oder Amid gesättigter oder ungesättigter aliphatischer Carbonsäuren mit 10 bis 40 C-Atomen mit aliphatischen gesättigten Alkoholen oder Aminen mit 2 bis 40 C-Atomen.

Als Komponente A₁) enthalten die erfindungsgemäßen Formmassen 97,5 bis 99,85, bevorzugt 98,1 bis 99,6 und insbesondere 98,8 bis 99,4 Gew.-% eines thermoplastischen Polyamids.

Die Polyamide der erfindungsgemäßen Formmassen weisen im allgemeinen eine Viskositätszahl VZ von 100 bis 350 ml/g auf, bestimmt in einer 0,5 gew.-%igen Lösung in 96 gew.%iger Schwefelsäure bei 25°C. Polyamide mit einer Viskositätszahl von 120 bis 250, insbesondere von 135 bis 180 ml/g werden bevorzugt verwendet.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/ oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und Polycaprolactam.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Als Komponente A₁) kommen außerdem teilaromatische, teilkristalline Copolyamide in Betracht, aufgebaut aus:
A₁₁) 20 bis 90 Gew.-% Einheiten, die sich von Terephthalsäure und Hexamethylendiamin ableiten,
A₂₂) 0 bis 50 Gew.-% Einheiten, die sich von ε-Caprolactam ableiten,
A₃₃) 0 bis 80 Gew.-% Einheiten, die sich von Adipinsäure und Hexamethylendiamin ableiten, und
A₄₄) 0 bis 40 Gew.-% weiteren polyamidbildenden Monomeren,
wobei der Anteil der Komponente (A₂₂) oder (A₃₃) oder (A₄₄) oder deren Mischungen mindestens 10 Gew.-% beträgt.

Die Komponente A₁₁) enthält 20 bis 90 Gew.-% Einheiten, die sich von Terephthalsäure und Hexamethylendiamin ableiten.

Neben den Einheiten, die sich von Terephthalsäure und Hexamethylendiamin ableiten, enthalten die Copolyamide Einheiten, die sich von e-Caprolactam ableiten und/oder Einheiten, die sich von Adipinsäure und Hexamethylendiamin und/oder Einheiten, die sich von weiteren polyamidbildenden Monomeren ableiten.

Der Anteil an Einheiten, die sich von ε-Caprolactam ableiten, beträgt maximal 50 Gew.-%, vorzugsweise 20 bis 50 Gew.-%, insbesondere 25 bis 40 Gew.-%, während der Anteil an Einheiten die sich von Adipinsäure und Hexamethylendiamin ableiten, bis zu 80 Gew.-%, vorzugsweise 30 bis 75 Gew.-% und insbesondere 35 bis 60 Gew.-% beträgt.

Die Copolyamide können auch sowohl Einheiten von ε-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Capro-lactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten A₁₁) und 20 bis 50, vorzugsweise 25 bis 40 Gew.-% Einheiten, die sich von ε-Caprolactam ableitem (Einheiten A₂₂)) enthalten, erwiesen.

Neben den vorstehend beschriebenen Einheiten A₁₁) bis A₃₃) können die teilaromatischen Copolyamide in Mengen bis 40, vorzugsweise 10 bis 30 Gew.-% und insbesondere 20 bis 30 Gew.-% an weiteren polyamidbildenden Monomeren A₄₄) enthalten; wie sie von anderen Polyamiden bekannt sind.

Aromatische Dicarbonsäuren A₄₄) weisen 8 bis 16 Kohlenstoffatome auf. Geeignete aromatische Dicarbonsäuren sind beispielsweise Isophthalsäure, substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphtalindicarbonsäure, Phenoxyterephthalsäure, wobei Isophtalsäure besonders bevorzugt sind.

Weitere polyamidbildende Monomere A₄₄) können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin, Piperazin, 4,4' -Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, Önanthlactam, w-Aminoundecansäure und Laurinlactam als Vertreter von Lactamen bzw.Aminocarbonsäuren genannt.

Hierbei sind folgende Zusammensetzungen der Komponente (A₁) besonders bevorzugt:
A₁₁) 65 bis 85 Gew.-% Einheiten, die sich von Terephthalsäure und Hexamethylendiamin ableiten und
A₄₄) 15 bis 35 Gew.-% Einheiten, die sich von Isophthalsäure und Hexamethylendiamin ableiten,
   oder
A₁₁) 50 bis 70 Gew.-% Einheiten, die sich von Terephthalsäure und Hexamethylendiamin ableiten,
A₃₃) 10 bis 20 Gew.-% Einheiten, die sich von Adipinsäure und Hexamethylendiamin ableiten
   und
A₄₄) 20 bis 30 Gew.-% Einheiten, die sich von Isophthalsäure und Hexamethylendiamin ableiten.

Enthält die Komponente (A₄₄) symmetrische Dicarbonsäuren, bei denen die Carboxylgruppen in para-Stellung stehen, so empfiehlt es sich, diese mit (A₁₁) und (A₂₂) oder (A₁₁) und (A₃₃) als ternäre Copolyamide aufzubauen, da andernfalls das Copolyamid einen zu hohen Schmelzpunkt aufweist und nur unter Zersetzung schmilzt, was nicht wünschenswert ist.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 270°C bis 325°C, bevorzugt von 280 bis 310°C, wobei dieser hohe Schmelzpunkt auch mit einer hohen Glasübergangstemperatur von in der Regel mehr als 75, insbesondere mehr als 85°C (im trockenen Zustand) verbunden ist.

Binäre Copolyamide auf der Basis von Terephthalsäure, Hexamethylendiamin und ε-Caprolactam weisen bei Gehalten von etwa 70 Gew.-% an Einheiten, die sich von Terephthalsäure und Hexamethylendiamin ableiten, Schmelzpunkte im Bereich von 300°C und (im trockenen Zustand) eine Glasübergangstemperatur von mehr als 110°C auf.

Binäre Copolyamide auf der Basis von Terephthalsäure, Adipinsäure und Hexamethylendiamin erreichen bereits bei niedrigeren Gehalten von etwa 55 Gew.-% Einheiten aus Terephthalsäure und Hexamethylendiamin (HMD) Schmelzpunkte von 300°C und mehr, wobei die Glastemperatur nicht ganz so hoch liegt wie bei binären Copolyamiden, die anstelle von Adipinsäure bzw. Adipinsäure/HMD ε-Caprolactam enthalten.

Bei den teilaromatischen Copolyamide sollen erfindungsgemäß solche verstanden werden, die einen Kristallinitätsgrad >10 %, bevorzugt >15 %, und insbesondere >20 % aufweisen.

Der Kristallinitätsgrad ist ein Maß für den Anteil an kristallinen Fragmenten im Copolyamid und wird durch Röntgenbeugung bestimmt.

Die Herstellung der bevorzugten teilaromatischen Copolyamide mit niedrigem Triamingehalt kann nach den in den EP-A 129 195 und 129 196 beschriebenen Verfahren erfolgen.

Als Komponente A₂) enthalten die erfindungsgemäßen Formmassen 0,05 bis 0,5, vorzugsweise 0,1 bis 0,4 und insbesondere 0,1 bis 0,2 Gew.-% Aluminiumhydroxid.

Es gibt mehrere hydradisierte Formen der Tonerde, die den allgemeinen Formeln AlO·OH und Al(OH)₃ entsprechen, wobei Al(OH)₃ bevorzugt ist.

Zugabe von Ammoniak zu einer Aluminiumsalzlösung ergibt eine Form des AlO·OH, welche als Böhmit bezeichnet wird. Eine zweite Form tritt in der Natur als Mineral Diaspor auf. Al(OH)₃ wird im allgemeinen aus alkalische Aluminatlösungen durch Fällung mit Kohlendioxid hergestellt. Derartige Hydroxide sind im Handel u.a. als Martinal® erhältlich.

Die mittlere Korngröße beträgt im allgemeinen von 0,5 bis 4 µm, bevorzugt von 0,8 bis 3 µm.

Als Komponente A₃) enthalten die erfindungsgemäßen Formmassen 0,1 bis 2, vorzugsweise 0,3 bis 1,5 und insbesondere 0,5 bis 1 Gew.-% mindestens eines Esters oder Amids gesättigter oder ungesättigter aliphatischer Carbonsäuren mit 10 bis 40, bevorzugt 16 bis 22 C-Atomen mit aliphatischen gesättigten Alkoholen oder Aminen mit 2 bis 40, vorzugsweise 2 bis 6 C-Atomen.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, ropylenglykol, Neopentylglykol, Glycerin, wobei Pentaerythrit bevorzugt ist.

Die aliphatischen Amine können 1- bis 3-wertig sein. Beispiele hierfür sind Stearylamin, Ethylendiamin, Propylendiamine, Hexamethylendiamin, Di(6-Aminohexyl)amin, wobei Ethylendiamin und Hexamethylendiamin besonders bevorzugt sind. Bevorzugte Ester oder Amide sind entsprechend Pentaerythritdistearat und Ethylendiamindistearat.

Es können auch Mischungen verschiedener Ester oder Amide oder Ester mit Amiden in Kombination eingesetzt werden, wobei das Mischungsverhältnis beliebig ist.

Als Komponente B) können die erfindungsgemäßen Formmassen 0 bis 40, bevorzugt 5 bis 25 und insbesondere 10 bis 20 Gew.-% eines kautschukelastischen Polymerisates enthalten.

Bevorzugte kautschukelastische Polymerisate sind Polymerisate auf Basis von Olefinen, die aus folgenden Komponenten aufgebaut sind:
b₁) 40 bis 100 Gew.-% mindestens eines α-Olefins mit 2 bis 8 C-Atomen
b₂) 0 bis 50 Gew.-% eines Diens
b₃) 0 bis 45 Gew.-% eines C₁-C₁₂-Alkylesters der Acrylsäure oder Methacrylsäure oder Mischungen derartiger Ester,
b₄) 0 bis 40 Gew.-% einer ethylenisch ungesättigen Mono- oder Dicarbonsäure oder einem funktionellen Derivat einer solchen Säure
b₅) 0 bis 40 Gew.-% eines Epoxygruppen enthaltenden Monomeren,
mit der Maßgabe, daß die Komponente (B) kein Olefinhomopolymerisat ist.

Als erste bevorzugte Gruppe sind die sogenannten Ethylen-Propylen-(EPM)- bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (MLI+4/100°C) solcher, vorzugsweise unvernetzter, EPM- bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen während EPDM-Kautschuke 1 bis 20 Doppelbindungen/100 C-Atome aufweisenkönnen.

Als Dien-Monomere b₂) für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 2 bis 20 und besonders bevorzugt 3 bis 15 Gew.-%, bezogen auf das Gesamtgewicht des Olefinpolymerisats.

EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.

Eine weitere Gruppe bevorzugter Olefinpolymerisate sind Copolymere von α-Olefinen mit 2 bis 8 C-Atomen, insbesondere des Ethylens, mit C₁-C₁₈-Alkylestern der Acrylsäure und/oder Methacrylsäure.

Grundsätzlich eignen sich alle primären und sekundären C₁-C₁₈-Alkylester der Acrylsäure oder Methacrylsäure, doch werden Ester mit 1 bis 12 C-Atomen, insbesondere mit 2 bis 10 C-Atomen bevorzugt.

Beispiele hierfür sind Methyl-, Ethyl-, Propyl-, n-, 1-Butyl- und 2-Ethyl-hexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester b₃) an den Olefinpolymerisaten beträgt 0 bis 60, vorzugsweise 10 bis 50 und insbesondere 30 bis 45 Gew.-%.

Anstelle der Ester b₃) oder zusätzlich zu diesen können in den Olefinpolymerisaten auch säurefunktionelle und/oder latent säurefunktionelle Monomere ethylenisch ungesättigter Mono- oder Dicarbonsäuren b₄) oder Epoxygruppen aufweisende Monomere b₅) enthalten sein.

Die säurefunktionellen bzw. latent säurefunktionellen Monomeren und die Epoxygruppen-enthaltenden Monomeren werden vorzugsweise durch Zugabe von Verbindungen der allgemeinen Formeln I-IV zum Monomerengemisch in die Olefinpolymerisate eingebaut.

R₁C(COOR₂)= C(COOR₃)R₄ (I)

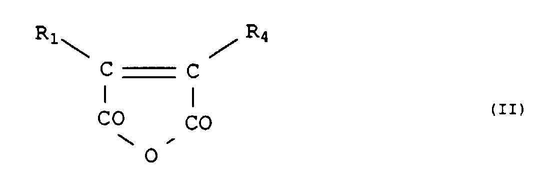

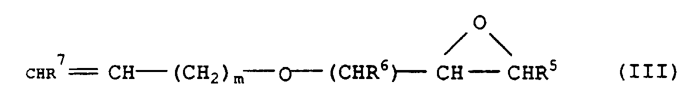

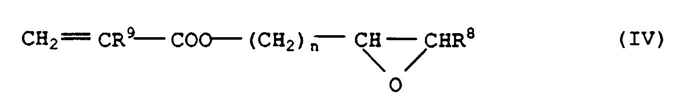

wobei die Reste R₁ bis R₉ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für R₁ bis R₇ ist Wasserstoff, für m der Wert 0 oder 1 und für n der Wert 1. Die entsprechenden Verbindungen sind Maleinsäure, Fumarsäure, Maleinsäureanhydrid, b₄) bzw. Alkenylglycidylether oder Vinylglycidylether b₅).

Bevorzugte Verbindungen der Formeln I, II, III und IV sind Maleinsäure und Maleinsäureanhydrid als Komponente b₄) und Epoxygruppen-enthaltende Ester der Acrylsäure und/oder Methacrylsäure, wobei Glycidylacrylat und Glycidylmethacrylat (als Komponente b₅) besonders bevorzugt werden.

Der Anteil der Komponenten b₄) bzw. b₅) beträgt jeweils 0,07 bis 40 Gew.-%, insbesondere 0,1 bis 20 und besonders bevorzugt 0,15 bis 15 Gew.-%, bezogen auf das Gesamtgewicht der Olefinpolymerisate.

Besonders bevorzugt sind Olefinpolymerisate aus
- 50 bis 98,9: insbesondere 60 bis 95 Gew.% Ethylen,
- 0,1 bis 20,: insbesondere 0,15 bis 15 Gew.% Glycidylacrylat und/oder Glycidylmethacrylat, Acrylsäure und/oder Maleinsäureanhydrid,
- 1 bis 45,: insbesondere 10 bis 35 Gew.% n-Butylacrylat und/oder 2-Ethylhexylacrylat.

Weitere bevorzugte Ester der Acryl- und/oder Methacrylsäure sind die Methyl-, Ethyl-, Propyl- und i-Butylester.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190°C und 2,16 kg Belastung).

Außer den vorstehenden bevorzugten kautschukelastischen Polymerisaten auf Basis von Olefinen eignen sich als Elastomere (B) beispielsweise die folgenden Polymerisate:

In erster Linie sind hier Emulsionspolymerisate zu nennen, deren Herstellung z.B. in Houben-Weyl, Methoden der organischen Chemie, Band XII. I (1961), sowie bei Blackley in der Monographie "Emulsion Polymerisation" beschrieben wird.

Grundsätzlich können statistisch aufgebaute Elastomere oder aber solche mit einem Schalenaufbau eingesetzt werden. Der schalenartige Aufbau wird durch die Zugabereihenfolge der einzelnen Monomeren bestimmt.

Als Monomere für die Herstellung des Kautschukteils der Elastomeren seien Acrylate wie n-Butylacrylat und 2-Ethylhexylacrylat, entsprechende Methacrylate, Butadien und Isopren sowie deren Mischungen genannt. Diese Monomeren können mit weiteren Monomeren wie Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 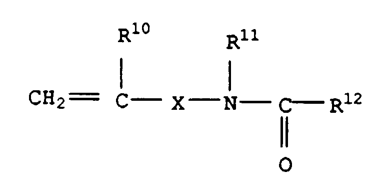 eingeführt werden können,
wobei die Substituenten folgende Bedeutung haben können:
- R¹⁰: Wasserstoff, oder eine C₁-C₄-Alkylgruppe,
- R¹¹: Wasserstoff, eine C₁-C₈-Alkylgruppe oder eine Arylgruppe, insbesondere Phenyl,
- R¹²: Wasserstoff, eine C₁-C₁₀-Alkyl-, eine C₆-C₁₂-Arylgruppe oder OR^{13,}
- R13: eine C₁-C₈-Alkyl- oder C₆-C₁₂-Arylgruppe, die gegebenenfalls mit O- oder N-haltigen Gruppen substituiert sein können, eine chemische Bindung, eine C₁-C₁₀-Alkylen- oder C₆-C₁₂-Arylengruppe oder 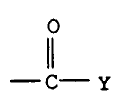
- Y: O-Z- oder NH-Z und
- Z: eine C₁-C₁₀-Alkylen- oder C₆-C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino) ethyl-methacrylat, (N, N-Dimethylamino)ethylacrylat, (N,N-Dimethylamino)methyl-acrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentodienylacrylat sowie die in der EP-A 50 265 beschriebenen Verbindungen.

Ferner können auch sogenannten pfropfvernetzende Monomere (graft-linkingmonomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine Doppelbindung mit etwa gleicher Geschwindigkeit wie die übrigen Monomeren polymerisiert, während der restliche Teil der Doppelbindungen deutlich langsamer polymerisiert. Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente (B) bis zu 5 Gew.%, vorzugsweise nicht mehr als 3 Gew.%, bezogen auf (B).

Im folgenden seien einige bevorzugte Emulsionspolymerisate aufgeführt.

Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| B/1 | Buta-1,3-dien, Isopren, n-Butylacrylat, Ethylhexylacrylat oder deren Mischungen | Styrol, Acrylnitril, Methylmethacrylat |
| B/2 | wie B/1 aber unter Mitverwendung von Vernetzern | wie B/1 |
| B/3 | wie B/1 oder B/2 | n-Butylacrylat, Ethylacrylat, Methylacrylat, Buta-1,3-dien, Isopren, Ethylhexylacrylat |
| B/4 | wie B/1 oder B/2 | wie B/1 oder B/3 aber unter Mitverwendung von Monomeren mit reaktiven Gruppen wie hierin beschrieben |
| B/5 | Styrol, Acrylnitril, Methylmethacrylat oder deren Mischungen | erste Hülle aus Monomeren wie unter B/1 und B/2 für den Kern beschrieben zweite Hülle wie unter B/1 oder B/3 für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylate oder n-Butyl-acrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere (B) können auch nach anderen üblichen Verfahren, z.B. durch Suspensionspolymerisation, hergestellt werden.

Neben den wesentlichen Komponenten A₁) bis A₃) und gegebenenfalls B) können die erfindungsgemäßen Formmassen übliche Zusatzstoffe und Verarbeitungshilfsmittel (C) enthalten. Deren Anteil beträgt im allgemeinen bis zu 10, vorzugsweise bis zu 5 Gew.%, bezogen auf das Gesamtgewicht der Komponenten (A₁) bis (A₃).

Übliche Zusatzstoffe sind beispielsweise Stabilisatoren und Oxidationsverzögerer, Mittel gegen Wärmezersetzung und Zersetzung durch ultra-violettes Licht, Farbstoffe, Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.%, bezogen auf dasGewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert.

Die erfindungsgemäßen Formmassen zeichnen sich durch gute Fließfähigkeit und UV-Stabilität aus.

Zusätzlich weisen sie eine gute Flammbeständigkeit auf und lassen sich mittels üblicher Verfahren problemlos hestellen.

Infolge dieses Eigenschaftsspektrums eignen sich die aus den erfindungsgemäßen Formmassen herstellbaren Formkörper besonders für elektrische und elektronische Bauteile, z.B. Elektromotorteile (Motorschutzschalter, Leistungsschütze), Elektroheizgeräte oder Gehäuseteile für Hochspannungsschalter. Besonders geeignet sind die erfindungsgemäßen Formmassen zur Herstellung von Formkörpern mit dünnen Wänden und langen Fließwegen wie Kabelbindern, die im Elektrosektor Anwendung finden.

### Beispiele

### Beispiele 1 bis 9

Polyamid 66 (PA1; Ultramid®A3 der BASF AG) mit einer Viskositätszahl von 151 ml/g (gemessen an einer 0,5 gew.-%igen Lösung in 96gew.-%iger H₂SO₄ nach ISO 307 bei 25°C) wurde auf einen Zweiwellenextruder ZSK 30 der Fa. Werner & Pfleiderer) mit Al(OH)₃ und Estern sowie Amiden in unterschiedlichen Mengenverhältnisse konfektioniert (280°C bei 250 U/min und 25 kg/h Durchsatz). Die Produkte wurden zu einem Strang extrudiert und granuliert. Als Ester wurde Pentaerythritdistearat (abgekürzt Stab.) (Stabiol®CA 1362 der Henkel KGaA) und als Amid das Distearat des Ethylendiamins (abgekürzt EAST) (Synthewax® der Firma Henkel KGaA) sowie als Al(OH)₃ Martinal® OL-104 der Martinswerke eingesetzt.

### Vergleichsversuche I bis V

Es wurde wie in den Beispielen 1 bis 9 gearbeitet, jedoch ohne jeglichen Zusatz (II) oder ohne Zusatz von Al(OH)₃ (I, III, IV, V). Vergleichsbeispiel V enthielt Aluminiumtristearat (AlSt) (Alugel® 34TH der Bärlocher GmbH).

### Vergleichsversuche VI bis XII

Es wurde wie in den Beispielen 1 bis 9 gearbeitet, jedoch zu einer konstanten Mengen Stabiol® verschiedene Hydroxide, Oxide oder Carbonate zugesetzt.

### Beispiel 10

Es wurde wie in den Beispielen 1 bis 9 gearbeitet, jedoch Polyamid 66 (PA2; Ultramid® A4 der BASF AG) mit einer Viskositätszahl von 186 ml/g verwendet.

### Vergleichsbeispiele XIII bis XV

Es wurde analog Beispiel 10 gearbeitet, jedoch ohne Schmiermittel (XIV) sowie anderen Schmiermitteln gemäß Tabelle.

Nach Trocknung des Granulates (8 Stunden bei 80°C im Vakuum) wurden auf einer Spritzgußmaschine Prüfkörper hergestellt (Massetemperatur: 280°C, Werkzeugoberflächentempeatur: 80°C) und folgende Prüfungen durchgeführt.
- Elastizitätsmodul nach DIN 54 457
- Zugfestigkeit nach DIN 54 455
- Durchstoßarbeit W_{ges} nach DIN 53 443
- UL 94 an 0,8/1,6/3,2 mm dicken Flachstäben
- Schmelzvolumenindex MVI bei 275°C und 2,16 kg Belastung
- VZ (Viskositätszahl) nach ISO 307 (96 gew.-%ige H₂SO₄)
- kürzestmögliche Zykluszeit an einem Testwerkzeug (Staubsaugerdeckel) bei konstanten Bedingungen: Massetemperatur 290°C, Werkzeugoberflächentemperatur 62°C, Einspritzdruck 500 bar

Die Zusammensetzung der Formmassen und die Ergebnisse der Messungen sind den Tabellen zu entnehmen.

**Tabelle 1**

| Beispiel | Zusammensetzung | | | | | |
|---|---|---|---|---|---|---|
| | Gew.-% A₁) | | Gew.-% A₂) | | Gew.-% A₃) | |
| I | 99.50 | PA1 | | | 0.5 | Stab |
| 1 | 99.45 | PA1 | 0.05 | Al(OH)₃ | 0.5 | Stab |
| 2 | 99.40 | PA1 | 0.10 | Al(OH)₃ | 0.5 | Stab |
| 3 | 99.35 | PA1 | 0.15 | Al(OH)₃ | 0.5 | Stab |
| 4 | 99.25 | PA1 | 0.25 | Al(OH)₃ | 0.5 | Stab |
| 5 | 99.00 | PA1 | 0.50 | Al(OH)₃ | 0.5 | Stab |
| | | | | | | |
| 6 | 99.60 | PA1 | 0.15 | Al(OH)₃ | 0.3 | Stab |
| 7 | 98.85 | PA1 | 0.15 | Al(OH)₃ | 1.0 | Stab |
| | | | | | | |
| 8 | 99.35 | PA1 | 0.15 | Al(OH)₃ | 0.5 | EASt |
| 9 | 98.85 | PA1 | 0.15 | Al(OH)₃ | 1.0 | EASt |
| | | | | | | |
| II | 100.00 | PA1 | | | | |
| III | 99.00 | PA1 | | | 1.0 | Stab |
| IV | 99.00 | PA1 | | | 1.0 | EASt |
| V | 99.00 | PA1 | | | 1.0 | AlSt |
| | | | | | | |
| VI | 99.35 | PA1 | 0.15 | Mg(OH)₂ | 0.5 | Stab |
| VII | 99.35 | PA1 | 0.15 | Al₂O₃ | 0.5 | Stab |
| VIII | 99.35 | PA1 | 0.15 | Ca(OH)₂ | 0.5 | Stab |
| IX | 99.35 | PA1 | 0.15 | Ca(CO)₃ | 0.5 | Stab |
| X | 99.35 | PA1 | 0.15 | SiO₂ | 0.5 | Stab |
| XI | 99.35 | PA1 | 0.15 | B₂O₃ | 0.5 | Stab |
| XII | 99.35 | PA1 | 0.15 | Sb₂O₃ | 0.5 | Stab |
| | | | | | | |
| 10 | 98.85 | PA2 | 0.15 | Al(OH)₃ | 1.0 | Stab |
| XIII | 99.00 | PA2 | | | 1.0 | AlSt |
| XIV | 100.00 | PA2 | | | | |
| XV | 98.85 | PA2 | 0.15 | Al₂O₃ | 1.0 | Stab |

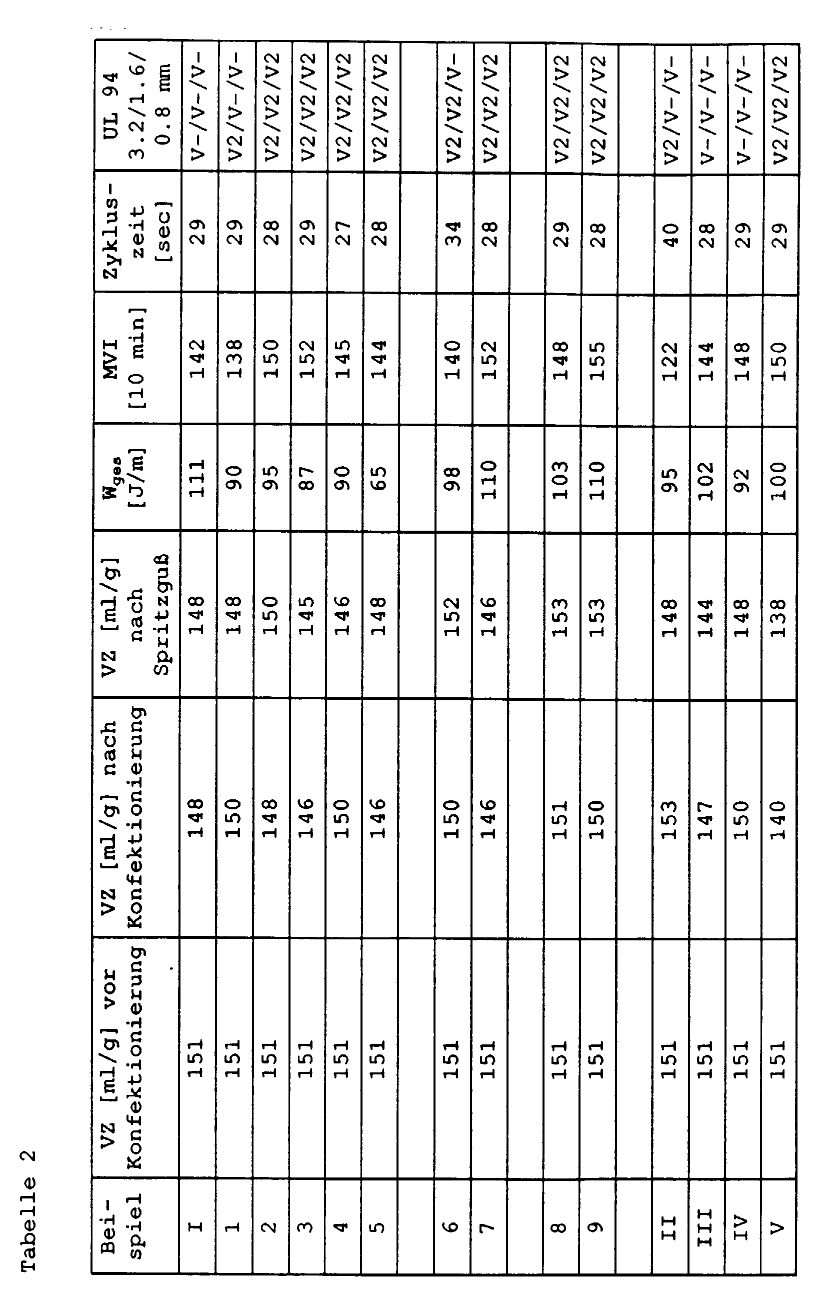

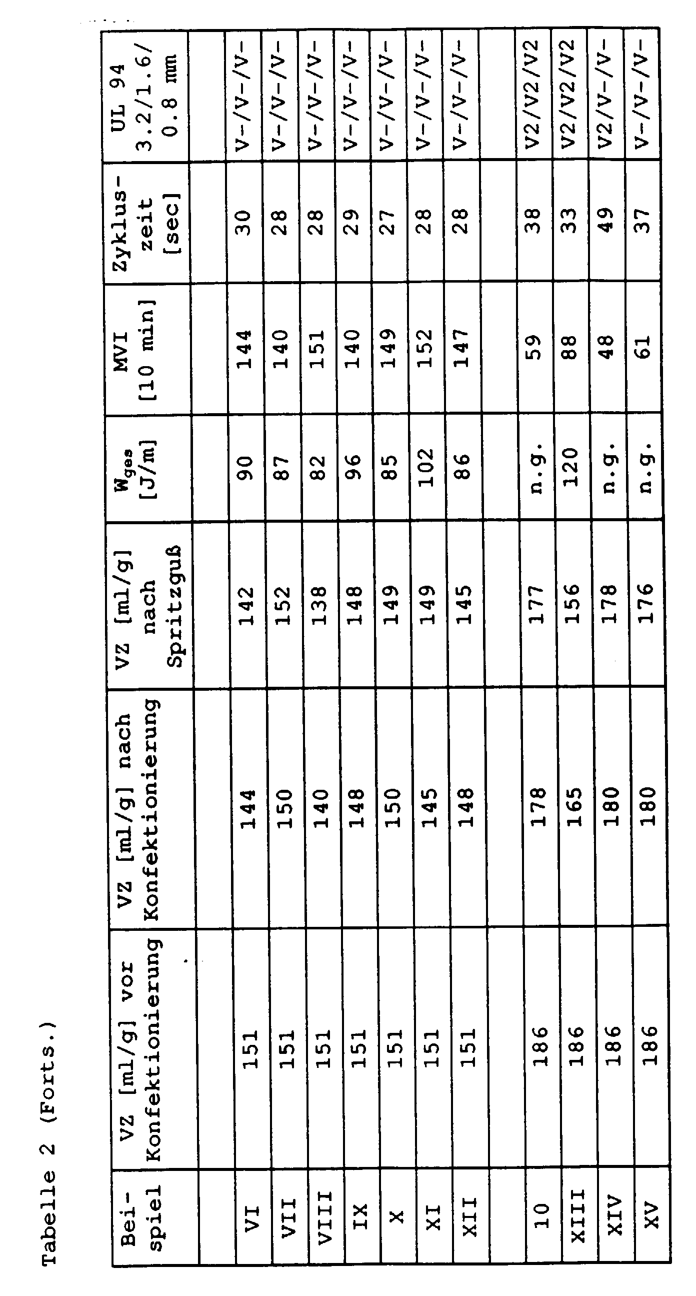

## Patentansprüche

1. Unverstärkte Polyamidformmassen, enthaltend
A) 60 bis 100 Gew.-% einer Mischung, bestehend aus
A₁) 97,5 bis 99,85 Gew.-% mindestens einem Polyamid,
A₂) 0,05 bis 0,5 Gew.-% Aluminiumhydroxid und
A₃) 0,1 bis 2 Gew.-% mindestens einem Ester oder Amid gesättigter oder ungesättigter aliphatischer Carbonsäuren mit 10 bis 40 C-Atomen mit aliphatischen gesättigten Alkoholen oder Aminen mit 2 bis 40 C-Atomen
sowie, bezogen auf das Gesamtgewicht der Polyamidformmassen,
B) 0 bis 40 Gew.-% eines schlagzähmodifizierenden Polymeren
C) 0 bis 10 Gew.-% üblicher Zusatzstoffe in wirksamen Mengen.

2. Unverstärkte Polyamidformmassen nach Anspruch 1, in denen die Komponente A) aus
A₁) 98,1 bis 99,6 Gew.-%
A₂) 0,1 bis 0,4 Gew.-%
A₃) 0,3 bis 1,5 Gew.-%
aufgebaut ist.

3. Unverstärkte Polyamidformmassen nach den Ansprüchen 1 oder 2 enthaltend
A) 80 bis 90 Gew.-% und
B) 10 bis 20 Gew.-%.

4. Unverstärkte Polyamidformmassen nach den Ansprüchen 1 bis 3, in denen die Komponente A₁) aus Polyhexamethylenadipinsäureamid oder Poly-ε-Caprolactam oder deren Mischungen besteht.

5. Unverstärkte Polyamidformmassen nach den Ansprüchen 1 bis 4, in denen die Komponente A₁) ein teilaromatisches teilkristallines Copolyamid ist, aufgebaut aus:
A₁₁) 20 bis 90 Gew.-% Einheiten, die sich von Terephthalsäure und Hexamethylendiamin ableiten,
A₂₂) 0 bis 50 Gew.-% Einheiten, die sich von ε-Caprolactam ableiten,
A₃₃) 0 bis 80 Gew.-% Einheiten, die sich von Adipinsäure und Hexamethylendiamin ableiten, und
A₄₄) 0 bis 40 Gew.-% weiteren polyamidbildenden Monomeren,
wobei der Anteil der Komponente (A₂₂) oder (A₃₃) oder (A₄₄) oder deren Mischungen mindestens 10 Gew.-% beträgt.

6. Unverstärkte Polyamidformmassen nach den Ansprüchen 1 bis 5, in denen die Komponente A₃) aus Pentaerythritdistearat oder Ethylendiamindistearat oder deren Mischungen besteht.

7. Verwendung der unverstärkten Polyamidformmassen gemäß den Ansprüchen 1 bis 6 zur Herstellung von Fasern, Folien und Formkörpern.

8. Formkörper erhältlich aus den unverstärkten Polyamidformmassen gemäß den Ansprüchen 1 bis 6.

## Claims

1. An unreinforced polyamide molding material, containing
A) from 60 to 100% by weight of a mixture consisting of
A₁) from 97.5 to 99.85% by weight of one or more polyamides,
A₂) from 0.05 to 0.5% by weight of aluminum hydroxide and
A₃) from 0.1 to 2% by weight of one or more esters or amides of saturated or unsaturated aliphatic carboxylic acids of 10 to 40 carbon atoms with aliphatic saturated alcohols or amines of 2 to 40 carbon atoms
and, based on the total weight of the polyamide molding material,
B) from 0 to 40% by weight of a toughened polymer and
C) from 0 to 10% by weight of conventional additives in effective amounts.

2. An unreinforced polyamide molding material as claimed in claim 1, wherein component A) is composed of
from 98.1 to 99.6% by weight of A₁),
from 0.1 to 0.4% by weight of A₂) and
from 0.3 to 1.5% by weight of A₃).

3. An unreinforced polyamide molding material as claimed in claim 1 or 2, containing
from 80 to 90% by weight of A) and
from 10 to 20% by weight of B).

4. An unreinforced polyamide molding material as claimed in claim 1 or 2 or 3, wherein component A₁) consists of polyhexamethyleneadipamide or poly-ε-caprolactam or a mixture thereof.

5. An unreinforced polyamide molding material as claimed in claim 1 or 2 or 3 or 4, wherein component A₁) is a partly aromatic semicrystalline copolyamide composed of:
A₁₁) from 20 to 90% by weight of units derived from terephthalic acid and hexamethylenediamine,
A₂₂) from 0 to 50% by weight of units derived from ε-caprolactam,
A₃₃) from 0 to 80% by weight of units derived from adipic acid and hexamethylenediamine,
and
A₄₄) from 0 to 40% by weight of other polyamideforming monomers,
the amounts of components (A₂₂) or (A₃₃) or (A₄₄) or mixtures thereof being not less than 10% by weight.

6. An unreinforced polyamide molding material as claimed in claim 1 or 2 or 3 or 4 or 5, wherein component A₃) consists of pentaerythrityl distearate or ethylenediamine distearate or a mixture thereof.

7. Use of an unreinforced polyamide molding material as claimed in claim 1 or 2 or 3 or 4 or 5 or 6 for the production of fibers, films and moldings.

8. A molding obtainable from an unreinforced polyamide molding material as claimed in claim 1 or 2 or 3 or 4 or 5 or 6.

## Revendications

1. Masses à mouler de polyamide non renforcées, contenant
A) 60 à 100% en poids d'un mélange composé de
A₁) 97,5 à 99,85% en poids d'au moins un polyamide,
A₂) 0,05 à 0,5% en poids d'hydroxyde d'aluminium et
A₃) 0,1 à 2% en poids d'au moins un ester ou amide d'acide carboxylique aliphatique saturé ou insaturé à 10-40 atomes de carbone avec des alcools ou amines aliphatiques saturés à 2-40 atomes de carbone,
ainsi que, par rapport au poids total des masses à mouler de polyamide,
B) 0 à 40% en poids d'un polymère modifiant la résilience,
C) 0 à 10% en poids d'additifs usuels dans des proportions efficaces.

2. Masses à mouler de polyamide non renforcées selon la revendication 1, dans lesquelles le composant A) se compose de
A₁) 98,1 à 99,6% en poids,
A₂) 0,1 à 0,4% en poids,
A₃) 0,3 à 1,5% en poids.

3. Masses à mouler de polyamide non renforcées selon la revendication 1 ou 2, contenant
A) 80 à 90% en poids et
B) 10 à 20% en poids.

4. Masses à mouler de polyamide non renforcées selon l'une quelconque des revendications 1 à 3, dans lesquelles le composant A₁) est constitué par du polyhexaméthylène adipamide, par du poly(ε-caprolactame) ou par des mélanges de ceux-ci.

5. Masses à mouler de polyamide non renforcées selon l'une quelconque des revendications 1 à 4, dans lesquelles le composant A₁) est un copolyamide partiellement aromatique et partiellement cristallin, composé de
A₁₁) 20 à 90% en poids de motifs qui dérivent d'acide téréphtalique et d'hexaméthylènediamine,
A₂₂) 0 à 50% en poids de motifs qui dérivent d'ε-caprolactame,
A₃₃) 0 à 80% en poids de motifs qui dérivent d'acide adipique et d'hexaméthylènediamine,
et
A₄₄) 0 à 40% en poids d'autres monomères formant des polyamides,
la proportion des composants A₂₂), A₃₃), A₄₄) ou des mélanges de ceux-ci s'élevant au moins à 10% en poids.

6. Masses à mouler de polyamide non renforcées selon l'une quelconque des revendications 1 à 5, dans lesquelles le composant A₃) est constitué par du distéarate de pentaérythritol, du distéarate d'éthylènediamine ou des mélanges de ceux-ci.

7. Utilisation des masses à mouler de polyamide non renforcées selon l'une quelconque des revendications 1 à à pour la fabrication de fibres, de feuilles et de corps moulés.

8. Corps moulés, obtenus à partir des masses à mouler de polyamide non renforcées selon l'une quelconque des revendications 1 à 6.
